## Europäisches Patentamt

## European Patent Office

## Office européen des brevets

(19)

(11) Veröffentlichungsnummer: **0 241 657**
B1

(12)

# EUROPÄISCHE PATENTSCHRIFT

(45) Veröffentlichungstag der Patentschrift:
24.01.90

(51) Int. Cl.⁴: **C10B 53/00**

(21) Anmeldenummer: 87101657.2

(22) Anmeldetag: 06.02.87

(54) Abfallbeseitigungseinrichtung für Problemstoffe.

(30) Priorität: 21.02.86 DE 3605693

(43) Veröffentlichungstag der Anmeldung:
21.10.87 Patentblatt 87/43

(45) Bekanntmachung des Hinweises auf die Patenterteilung:
24.01.90 Patentblatt 90/4

(84) Benannte Vertragsstaaten:
AT BE CH DE LI NL SE

(56) Entgegenhaltungen:
WO-A-80/02116
DE-B- 2 304 369
US-A- 3 841 239

(73) Patentinhaber: Siemens Aktiengesellschaft,
Wittelsbacherplatz 2, D-8000 München 2(DE)

(72) Erfinder: Meininger, Siegfried, Dipl.-Ing. (FH),
Mühlköppelstrasse 30, D-6472 Altenstadt(DE)

## Beschreibung

Die Erfindung betrifft ein Verfahren und eine Vorrichtung zur Abfallbeseitigung mit einer mit Rauchgasen beheizten Schwelkammer und mit einer Gasreinigungsanlage.

Eine aus der DE-PS 2 432 504 bekannte Abfallbeseitigungseinrichtung ist für die Beseitigung von Hausmüll unter dem Gesichtspunkt einer Wiedergewinnung der im Hausmüll vorhandenen Wertstoffe vorgesehen.

Die Erfindung beschäftigt sich dagegen mit der Beseitigung von Problemstoffen. Zu diesen zählen vor allem die halogenierten Kohlenwasserstoffe, die insbesondere in flüssiger Form verwendet werden, wie z.B. polychlorierte Biphenyle (PCB), polychlorierte Dibenzofurane (PCDF), polychlorierte Dibenzodioxine (PCDD) und weitere Organochlorverbindungen.

Solche hochgiftigen Stoffe werden bei hohen Temperaturen, d.h. mindestens 1200 °C, in unschädliche Bestandteile zersetzt. Der bisher dafür erforderliche Aufwand an Primärbrennstoff ist jedoch beträchtlich. Deshalb geht die Erfindung von der Aufgabe aus, die Abfallbeseitigungseinrichtung der eingangs genannten Art so zu verbessern, daß mit möglichst geringem Primärenergieeinsatz eine sichere Beseitigung von Problemstoffen gelingt und darüber hinaus noch weitere Problemstoffe, insbesondere ölverschmutztes Erdreich, so behandelt werden können, daß sie in den Kreislauf der Natur zurückgeführt werden können.

Erfindungsgemäß wird so verfahren, daß zur Beseitigung von Problemstoffen die Schwelkammer mit Rauchgasen einer Hochtemperatur-Schmelzkammer beheizt wird, die mit insbesondere flüssigen Abfallstoffen beschickt wird, daß die Rauchgase nach dem Verlassen der Schwelkammer in die Gasreinigungsanlage geführt werden und daß die Schwelgase in die Schmelzkammer geführt werden.

Auch bei der Erfindung erfolgt somit eine Hochtemperaturverbrennung von giftigen Abfällen. Dabei werden jedoch gezielt Abfallstoffe, insbesondere in flüssiger Form, z.B. als Abfallmineralöle, pflanzliche Abfallöle und -fette, Lösungsmittel usw. als Energieträger genutzt. Ihre Rauchgase werden zum Beheizen der Schwelkammer verwendet, in der weitere Abfälle, nämlich organisch belastete Feststoffe, wie z.B. ölverseuchte Böden ölhaltige Filterkuchen usw. in einem Schwelprozeß unter Luftabschluß durch Entgasung von den organischen Begleitstoffen befreit werden. Dabei werden mit den Rauchgasen der Schmelzkammer die für Schwelprozesse üblichen Temperaturen im Bereich von 300 bis 800 °C erhalten. .

Wesentlich für die Erfindung ist ferner, daß die Schwelgase in die Schmelzkammer geführt werden. Damit wird sichergestellt, daß in den Schwelgasen möglicherweise enthaltene Giftstoffe der vorgenannten Art unschädlich gemacht werden. Somit entsteht ohne Belastung der Umwelt in der Schwelkammer ein Rückstand, der unproblematisch abgelagert, z.B. rückverfüllt werden kann. Die aus der Schwelkammer mitgeführten Stäube gehen bei dem erfindungsgemäßen Verfahren in die Schmelzschlacke über. Aus dem Schwelgas entstandene Rauchgase werden zusammen mit den Rauchgasen der Flüssigverbrennung selbst in die Gasreinigungsanlage geführt. Damit wird eine Freisetzung von Giftstoffen insgesamt vermieden. Dennoch arbeitet die Erfindung praktisch ohne Zusatz von Primärenergie. Ein solcher Zusatz ist im wesentlichen nur zum Anfahren der Anlage notwendig.

Als erfindungsgemäße Vorrichtung zur Abfallbeseitigung ist eine mit Rauchgasen beheizte Schwelkammer mit einer Gasreinigungsanlage so ausgebildet, daß eine Schmelzkammer vorgesehen ist, die mit den Abfallstoffen beschickbar ist und mit der Schwelkammer durch eine Rauchgasleitung verbunden ist, daß von der Schwelkammer eine Schwelgasleitung, die beheizt ist, zur Schmelzkammer führt, und daß eine Rauchgasleitung von der Schwelkammer in die Gasreinigungsanlage führt. Dabei wird durch die Beheizung der von der Schwelkammer zur Schmelzkammer führende Schwelgasleitung das Auskondensieren von Giftstoffen vermieden, die in der Schmelzkammer noch zersetzt werden sollen.

Die Schwelkammer ist vorteilhaft eine an sich bekannte Schweltrommel. Sie wird vorzugsweise mit einer doppeltürigen Schleuse für eine Trockenausschleusung des Schwelgutes versehen, die in eine Feuchtraumatmosphäre, insbesondere ein Wasserbecken, führt. Mit der Schleusung wird vermieden, daß der Feuchtraum als Kühlfalle wirkt und es zu Schadstoffniederschlägen aus dem Schwelgas im Tauchwasser und befeuchteten Feststoffbereich kommt.

Zwischen der Schmelzkammer und der Schwelkammer ist vorteilhaft ein Strahlungskessel zur Energieerzeugung angeordnet, der von den Rauchgasen durchströmt wird. Mit einem solchen Kessel kann die in der Schmelzkammer anfallende Energie ausgenutzt werden, die unter Umständen nicht für die Beheizung der Schwelkammer benötigt wird. Darüber hinaus ist ein solcher Kessel deswegen günstig, weil damit die hohe Temperatur der Rauchgase auf ein für die Beheizung der Schwelkammer geeignetes geringeres Niveau herabgesetzt werden kann. Man kann ferner zwischen der Schweltrommel und der Gasreinigungsanlage einen Konvektionskessel zur Energieerzeugung anordnen, der von den Rauchgasen durchströmt wird. Hiermit ist ein weiterer Gewinn an nutzbarer Energie möglich. Zwischen dem Strahlungskessel und dem Konvektionskessel kann eine direkte Verbindung vorgesehen sein. Sie ermöglicht es, die Schwelkammer sozusagen im Nebenschluß mit den Rauchgasen zu beaufschlagen.

Damit kann man sich dem Wärmeverbrauch der Schwelkammer günstig anpassen. Die Verbindung kann zu diesem Zweck auch regelbar sein.

Bei einer besonders vorteilhaften Ausführungsform der Erfindung sind der Strahlungskessel und der Konvektionskessel in einem Gebäude baulich zusammengefaßt, an das die Rauchgasleitungen zu der und von der Schwelkammer und die Rauchgasleitung zur Gasreinigungsanlage angeschlossen sind. An das Gehäuse kann ferner die Schmelzkammer und eine für beide Kesselteile gemeinsame Naßentaschung angeschlossen sein. Damit gelingt ein kostengünstiger Aufbau, der den Betrieb der neuen Abfallbeseitigungseinrichtung besonders wirtschaftlich macht.

Die erfindungsgemäßen Verfahren und Vorrichtungen zur Abfallbeseitigung werden gemäß der weiteren Erfindung zur Dekontaminierung von verseuchtem Erdreich eingesetzt, wie es z.B. die Böden von Kokereistandorten mit unzulässigen Gehalten an Teerölen sind. Solche Feststoffe werden bisher auf Sondermülldeponien verbracht, die einen hohen Aufwand erfordern und entsprechend hohe Kosten verursachen.

Die bessere Eignung der neuen Verfahren und Vorrichtungen zur Verbrennung von halogenierten Kohlenwasserstoffen ergibt sich gegenüberbekannten Schmelzkammern durch den praktisch auf Null gesenkten Primärenergieeinsatz und durch die Behandlung aller Rauchgase in der Gasreinigungsanlage.

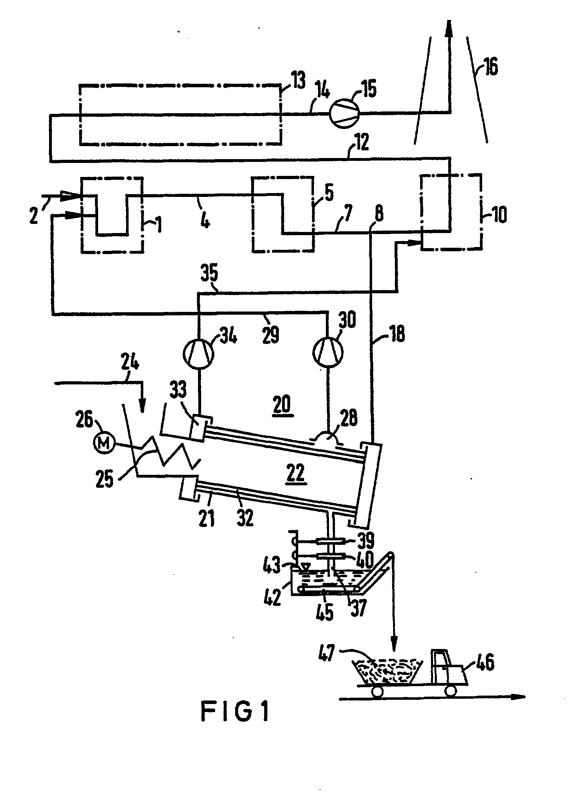

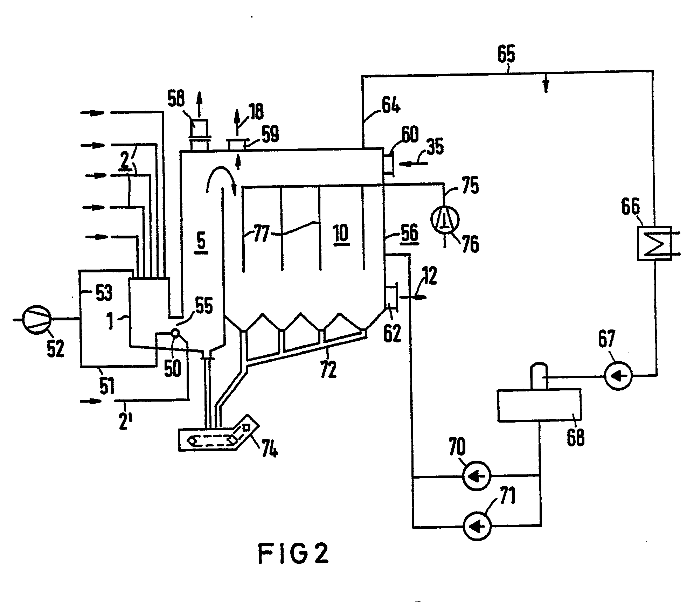

Zur näheren Erläuterung der Erfindung wird anhand der Zeichnung ein Ausführungsbeispiel beschrieben: Dabei zeigt die Figur 1 in einer schematischen Darstellung die Abfallbeseitigungseinrichtung als Ganzes, während die Figur 2 ebenfalls schematisiert die Zusammenfassung der Hochtemperatur-Schmelzkammer mit einem Kesselsystem zur Energieerzeugung unter Ausnutzung der Rauchgase der Schmelzkammer darstellt.

In Figur 1 ist mit 1 eine Hochtemperatur-Schmelzkammer bezeichnet, die durch ihren strichpunktiert dargestellten äußeren Umriß angedeutet ist. Die Schmelzkammer arbeitet mit Temperaturen von mindestens 1200 °C. Die Betriebswerte der Temperatur liegen üblicherweise bei 1400 °C. Dazu wird die Schmelzkammer 1 über die Abfalleitung 2 mit insbesondere flüssigem Abfall hohen Heizwerts beschickt. Der Abfall ist z.B. Abfallöl oder Abfallfett. Es kann sich ferner um Lösungsmittel oder um Kunststoff handeln. Die Schmelzkammer kann aber auch, mindestens zusätzlich, mit anderen Abfallstoffen hohen Heizwerts, z.B. mit Papier beschickt werden.

An die Schmelzklammer 1 schließt sich eine Rauchgasleitung 4 an, die in einen Strahlungskessel 5 führt. Der Strahlungskessel arbeitet als Dampferzeuger, wobei mit Temperaturen im Bereich von 1400 bis etwa 1000°C im Rauchgasraum Dampf mit Temperaturen von 270°C/27 bar erzeugt werden kann. Dieser Dampf könnte zum Antrieb einer Dampfturbine dienen, die nicht weiter dargestellt ist.

Aus dem Strahlungskessel 5 werden die Rauchgase mit einer Leitung 7 zu einer Verzweigung 8 geführt. Von dort geht ein Teil, z.B. 50 %, direkt in einen Konvektionskessel 10. Dort werden die Rauchgase in einem Temperaturbereich von etwa 1000°C bis zu 350 °C wiederum zur Dampferzeugung ausgenutzt. Die Dampftemperatur beträgt hier z.B. 270 °C.

Aus dem Konvektionskessel 10 führt eine Rauchgasleitung 12 in eine Rauchgasreinigungsanlage 13. Darin wird in bekannter Weise, insbesondere durch Auswaschen, eine Reinigung der Rauchgase vorgenommen, die es gestattet, die mit Leitung 14 austretenden, gereinigten Gase mit einem Saugzug 15 über einen Kamin 16 ins Freie abzugeben. Soweit bei der Reinigung toxische Flüssigkeiten, z.B. Säuren, entstehen, können diese wiederum der Schmelzkammer zugeführt werden.

Von der Verzweigung 8 wird ein weiterer Teil des Rauchgases über eine Leitung 18 mit Temperaturen von 1000°C oder mehr zur Beheizung in eine Schwelkammer 20 geführt, die in Form einer liegenden Schweltrommel 21 ausgeführt ist. Im Inneren 22 der Schweltrommel 21 herrscht eine Temperatur von beispielsweise 600°C. Bei dieser Temperatur werden ölkontaminiertes Erdreich, ölhaltige Filterstoffe oder andere Problemstoffe verschwelt, die mit einer Aufgabeeinrichtung 24 zugeführt und über eine Schnecke 25 mit einem Elektromotor 26 in die Schweltrommel 21 eingetragen werden. Der Durchsatz beträgt z.B. 5 t/h bei einer Durchlaufzeit von etwa einer Stunde. Die Körnung des Schwelgutes beträgt z.B. 20 mm.

Das bei der Verschwelung anfallende Schwelgas wird durch einen Auslaß 28 in eine beheizbare Schwelgasleitung 29 mit einem Gebläse 30 abgegeben. Das Gebläse fördert das Schwelgas in die Schmelzkammer 1. Damit wird sichergestellt, daß bei den hohen Temperaturen von mehr als 1200°C alle giftigen Bestandteile des Schwelgases, insbesondere halogenierte Kohlenwasserstoffe, in unschädliche Bestandteile aufgespalten werden.

Das Rauchgas der Leitung 18 durchströmt die Schweltrommel 21 entgegen der Förderrichtung durch Heizkanäle, die durch Rohre 32 angedeutet sind. Am beschickungsseitigen Ende der Trommel 21 ist ein Anschluß 33 vorgesehen, durch den das "abgearbeitete" Rauchgas von einem Rauchgasgebläse 34 abgezogen und über die Rauchgasleitung 35 in den Konvektionskessel 10 gefördert wird.

Am unteren Ende der Schweltrommel 21 ist ein Auslaß 37 für Feststoffe in Form einer doppeltürigen Schleuse mit den Schleusentoren 39 und 40 vorgesehen. Der Auslaß 37 führt in ein Wasserbecken 42, und zwar unter den Wasserspiegel 43, um das Austreten von Gasen zu verhindern. Am Boden des Wasserbeckens 42 ist eine Fördereinrichtung 45, z.B. ein Laufband, vorgesehen. Damit wird der dekontaminierte Reststoff für den Abtransport ausgetragen, der beim Ausführungsbeispiel durch einen Lastkraftwagen 46 angedeutet ist. Für den Fall, daß mit der Schwelkammer 20 kontaminiertes Erdreich behandelt wird, kann das dekontaminierte Erdreich, das bei 47 angedeutet ist, zur Rückverfüllung an einen Sandierungsstandort befördert werden.

In Figur 2 ist zu sehen, daß die Schmelzkammer 1 fünf Einlaßleitungen 2 für verschiedene Abfallstoffe aufweist, die nach ihrer Konsistenz, nach Transport- und Brenneigenschafte und nach dem Heizwert klassifiziert sein können. Es sind dies Leitungen 2 für Schwelgas, für Brennstoffe aus zwei Vorratsbehältern, für Leichtöl und für Zerstäuberdampf, die in die Oberseite der Schmelzkammer führen. Mit 2' ist eine weitere Leitung bezeichnet, die Leichtöl für Zusatzfeuer zu einem Brenner 50 liefert. Zum Brenner 50 führt auch eine Leitung 51 eines Frischluftgebläses 52, das über eine weitere Leitung 53 die Schmelzkammer 1 direkt mit Verbrennungsluft versorgt.

Die Hochtemperatur-Schmelzkammer 1 ist mit ihrem Rauchgasauslaß 55 unmittelbar an ein Gehäuse 56 angeschlossen, in dem der Strahlungskessel 5 und der Konvektionskessel als Dampferzeuger zur Energieerzeugung zusammengefaßt sind. Das Gehäuse 56 trägt an seiner Oberseite einen Notkamin 58, der normalerweise verschlossen ist. Neben dem Notkamin sitzt ein Auslaß 59. Dort wird das Rauchgas zur Beheizung der Schwelkammer 20 abgezogen, so daß der Pfeil der Leitung 18 in Figur 1 entspricht. Wie man sieht, liegt der Auslaß 59 im Bereich der Verbindung zwischen dem Strahlungskessel 5 und dem Konvektionskessel 10.

An der rechten Seite des Gehäuses 56 ist ein Einlaß 60 vorgesehen. Dort wird das von der Schweltrommel kommende Rauchgas zurückgespeist. Der Pfeil entspricht mithin der Leitung 35 in Figur 1. Ein weiterer Auslaß 62 ist für die Abfuhr der Rauchgase zur Gasreinigungsanlage vorgesehen. Somit entspricht der Pfeil der Leitung 12 in Figur 1.

An der Oberseite des Gehäuses 56 ist ein Dampfauslaß 64 angeordnet, der eine Dampfschiene 65 speist. Die Dampfschiene führt zu verschiedenen Verbrauchern. Als ein Verbraucher ist ein Wärmetauscher 66 für eine Fernwärmeversorgung angedeutet. Das von diesem zurückfließende Kondensat wird mit einer Kondensatpumpe 67 in einen Speisewasserbehälter 68 gefördert. Aus diesem speisen zwei parallele Speisewasserpumpen 70 und 71 die in dem Gehäuse 56 zusammengefaßten Kessel 5 und 10.

Zur Abfuhr von Flugstaub aus den Rauchgasen ist an der Unterseite des Gehäuses 56 ein System 72 zur Flugstaubabfuhr vorgesehen. Es führt zu einem Naßentascher 74, der für die Kessel 5 und 10 gemeinsam ist.

Im Bereich des Kessels 10 ist noch angedeutet, daß eine Druckluftleitung 75 mit einem Druckluftgebläse 76 Druckluftlanzen 77 speist, die als Rußbläser vorgesehen sind.

## Patentansprüche

1. Verfahren zur Abfallbeseitigung mit einer mit Rauchgasen beheizten Schwelkammer (20) und mit einer Gasreinigungsanlage (13), dadurch gekennzeichnet, daß zur Beseitung von Problemstoffen die Schwelkammer (20) mit Rauchgasen einer Hochtemperatur-Schmelzkammer (1) beheizt wird, die mit insbesondere flüssigen Abfallstoffen beschickt wird, daß die Rauchgase nach dem Verlassen der Schwelkammer (20) in die Gasreinigungsanlage (13) geführt werden und daß die Schwelgase in die Schmelzkammer (1) geführt werden.

2. Vorrichtung zur Abfallbeseitigung mit einer mit Rauchgasen beheizten Schwelkammer (20) und mit einer Gasreinigungsanlage (13), dadurch gekennzeichnet, daß eine Schmelzkammer (1) vorgesehen ist, die mit den Abfallstoffen beschickbar ist und mit der Schwelkammer (20) durch eine Rauchgasleitung (18) verbunden ist, daß von der Schwelkammer (20) eine Schwelgasleitung (29), die beheizt ist, zur Schmelzkammer (1) führt, und daß eine Rauchgasleitung (35) von der Schwelkammer (20) in die Gasreinigungsanlage (13) führt.

3. Vorrichtung nach Anspruch 2, dadurch gekennzeichnet, daß die Schwelkammer (20) eine an sich bekannte Schweltrommel (21) ist und daß die Schweltrommel (21) mit einer doppeltürigen Schleuse (37) für eine Trockenausschleusung des Schwelgutes versehen ist, die in eine Feuchtraumatmosphäre, insbesondere ein Wasserbecken (42) führt.

4. Vorrichtung nach Anspruch 2 oder 3, dadurch gekennzeichnet, daß zwischen der Schmelzkammer (1) und der Schwelkammer (20) ein Strahlungskessel (5) zur Energieerzeugung angeordnet ist, der von den Rauchgasen durchströmt wird.

5. Vorrichtung nach einem der Ansprüche 2 bis 4, dadurch gekennzeichnet, daß zwischen der Schwelkammer (20) und der Gasreinigungsanlage (13) ein Konvektionskessel (10) zur Energieerzeugung angeordnet ist, der von den Rauchgasen durchströmt wird.

6. Vorrichtung nach Anspruch 5, dadurch gekennzeichnet, daß zwischen dem Strahlungskessel (5) und dem Konvektionskessel (10) eine direkte Verbindung (8) vorgesehen ist.

7. Vorrichtung nach Anspruch 6, dadurch gekennzeichnet, daß der Strahlungskessel (5) und der Konvektionskessel (10) in einem Gehäuse (56) baulich zusammengefaßt sind, an das die Rauchgasleitungen (4, 35) zu der und von der Schwelkammer (20) und die Rauchgasleitung (12) zur Gasreinigungsanlage (13) angeschlossen sind.

8. Vorrichtung nach Anspruch 7, dadurch gekennzeichnet, daß an das Gehäuse (56) die Schmelzkammer (1) und eine für beide Kesselteile (5, 10) gemeinsame Naßentaschung (74) angeschlossen ist.

9. Verwendung des Verfahrens und der Vorrichtung zur Abfallbeseitigung nach einem der Ansprüche 1 bis 8 zur Dekontaminierung von verseuchtem Erdreich.

10. Verwendung des Verfahrens und der Vorrichtung zur Abfallbeseitigung nach einem der Ansprüche 1 bis 8 zur Verbrennung von halogenierten Kohlenwasserstoffen.

## Claims

1. Method for waste disposal with a carbonizing chamber (20) heated with flue gases and with a gas purification system (13), characterised in that for disposing of problematic materials the carbonizing chamber (20) is heated with flue gases from a high temperature melting chamber (1), which is fed with particularly liquid waste materials, in that the flue gases are led into the gas purification system after leaving the carbonizing chamber (20) and in that the carbonization gases are led into the melting chamber (1).

2. Device for waste disposal with a carbonizing chamber (20) heated with flue gases and with a gas purification system (13), characterised in that a melting chamber (1) is provided, which is able to be fed the waste material and is connected by a flue gas line (18) to the carbonizing chamber (20), in that a carbonization gas line (29), which is heated, leads from the carbonizing chamber (20) to the melting chamber (1) and in that a flue gas line (35) leads from the carbonizing chamber (20) into the gas purification system (13).

3. Device according to claim 2, characterised in that the carbonizing chamber (20) is a known carbonizing drum (21) and in that the carbonizing drum (21) is provided with a double-doored lock (37) for dry discharge of the carbonization matter, which leads into a humid room atmosphere, in particular a water basin (42).

4. Device according to claim 2 or 3, characterised in that arranged between the melting chamber (1) and the carbonizing chamber (20) there is a radiation boiler (5) for generating energy, through which flue gases pass.

5. Device according to one of claims 2 to 4, characterised in that arranged between the carbonizing chamber (20) and the gas purification system (13) there is a convection boiler (10) for generating energy, through which flue gases pass.

6. Device according to claim 5, characterised in that provided between the radiation boiler (5) and the convection boiler (10) there is a direct connection (8).

7. Device according to claim 6, characterised in that the radiation boiler (5) and the convection boiler (10) are structurally combined in a housing (56) attached to which are the flue gas lines (4, 35) to and from the carbonizing chamber (20) and the flue gas line (12) to the gas purification system (13).

8. Device according to claim 7, characterised in that the melting chamber (1) and a common wet ash removal device (74) for both boiler parts (5, 10) are attached to the housing (56).

9. Application of the method and the device for waste disposal according to one of claims 1 to 8 for decontaminating contaminated soil.

10. Application of the method and the device for waste disposal according to one of claims 1 to 8 for combustion of halogenated hydrocarbons.

## Revendications

1. Procédé d'élimination de déchets avec une chambre de distillation (20) chauffée par des gaz de fumée et avec une installation d'épuration des gaz (13), caractérisé en ce qu'il consiste, pour éliminer les substances toxiques, à chauffer la chambre de distillation (20) par des gaz de fumée d'une chambre de fusion à haute température (1) qui est alimentée notamment en déchets liquides, à envoyer les gaz de fumée, après qu'ils ont quitté la chambre de distillation (20), à l'installation d'épuration des gaz (13) et à envoyer les gaz de distillation à la chambre de fusion (1).

2. Installation d'élimination des déchets, comprenant une chambre de distillation (20) chauffée par des gaz de fumée et une installation d'épuration des gaz (13), caractérisée, en ce qu'il est près une chambre de fusion (1), qui peut être alimentée en les déchets et qui communique avec la chambre de, distillation (20) par un conduit pour les gaz de fumée (18), en ce que, de la chambre de distillation (20) part, vers la chambre de fusion (1), un conduit pour les gaz de distillation (29) et en ce qu'un conduit pour les gaz de fumée (35) mène de la chambre de distillation (20) à l'installation d'épuration des gaz (13).

3. Installation suivant la revendication 2, caractérisée en ce que la chambre de distillation (20) est un tambour de distillation (21) en soi connu, et en ce que le tambour de distillation (21) est muni d'un sas (37) à double porte pour faire sortir à sec le produit distillé, le sas conduisant dans une atmosphère ambiante humide, notamment dans un bassin d'eau (42).

4. Installation suivant la revendication 2 ou 3, caractérisée en ce que, entre la chambre de fusion (1) et la chambre de distillation (20), est montée une chaudière à rayonnement (5) de production d'énergie, dans laquelle passent les gaz de fumée.

5. Installation suivant l'une des revendications 2 à 4, caractérisée en ce que, entre la chambre de distillation (20) et l'installation d'épuration des gaz (13), est montée une chaudière à convexion (10) de production d'énergie, dans laquelle passent les gaz de fumée.

6. Installation suivant la revendication 5, caractérisée en ce qu'une liaison directe (8) est prévue entre la chaudière à rayonnement (5) et la chaudière à convexion (10).

7. Installation suivant la revendication 6, caractérisée en ce que la chaudière à rayonnement (5) et la chaudière à convexion (10) sont réunies, du point de vue de la construction, dans une enveloppe (56) à laquelle sont raccordés les conduits pour les gaz de fumée (4, 35) allant et venant de la chambre de distillation (20) et le conduit pour les gaz de fumée (12) allant à l'installation d'épuration des gaz (13).

8. Installation suivant la revendication 7, caractérisée en ce que, à l'enveloppe (56), sont raccordées la chambre de fusion (1) et une évacuation des cendres par voie humide (74), commune aux deux parties de chaudière (5, 10).

9. Utilisation du procédé et de l'installation d'élimination des déchets suivant l'une des revendications 1 à 8, pour la décontamination d'un sol pollué.

10. Utilisation du procédé et de l'installation d'élimination des déchets suivant l'une des revendications 1 a 8, pour la combustion d'hydrocarbures halogénés.

# FIG 1

FIG 2